(19) Europäisches Patentamt
European Patent Office
Office européen des brevets

(11) EP 0 825 418 B1

(12) EUROPÄISCHE PATENTSCHRIFT

(45) Veröffentlichungstag und Bekanntmachung des Hinweises auf die Patenterteilung:
**13.11.2002 Patentblatt 2002/46**

(51) Int Cl.[7]: **G01C 21/20**, B61L 25/02

(21) Anmeldenummer: **97250236.3**

(22) Anmeldetag: **13.08.1997**

(54) **Verfahren zur fehlertoleranten Positionsermittlung eines Objekts**

Method for the fault tolerant position detection of an object

Méthode pour la détection tolérante aux erreurs de la position d'un objet

(84) Benannte Vertragsstaaten:
**AT CH DE FR GB LI**

(30) Priorität: **19.08.1996 DE 19633884**

(43) Veröffentlichungstag der Anmeldung:
**25.02.1998 Patentblatt 1998/09**

(73) Patentinhaber: **SIEMENS AKTIENGESELLSCHAFT**
**80333 München (DE)**

(72) Erfinder: **Rehkopf, Andreas, Dr.-Ing.**
**38114 Braunschweig (DE)**

(56) Entgegenhaltungen:
**US-A- 5 129 605**
**US-A- 5 311 173**
**US-A- 5 311 195**
**US-A- 5 525 998**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung liegt auf dem Gebiet der Ortung und Positionsermittlung, insbesondere der autarken Positionsermittlung, von bewegten Objekten und insbesondere von Verkehrsmitteln.

Im Bereich der Luftfahrt und des Individualverkehrs hat sich das "Global Position System" (GPS) als Navigationshilfe durchgesetzt. Es ermöglicht auch bei ungünstigen Witterungsbedingungen eine hochgenaue Positionsermittlung. Allerdings können Abschattungen z.B. in Häuserschluchten oder in einem längeren Tunnel zu Positionsdatenverlusten führen. Das ursprünglich für militärische entwickelte GPS wird bei der zivilen Nutzung mit einem Störcode überlagert, so daß mit reduzierter Genauigkeit gearbeitet werden muß. Diese Aspekte führen u.a. zu einer bislang mangelnden Akzeptanz gegenüber GPS bei dem spezielle sicherheitstechnische Anforderungen stellenden Schienenverkehr.

Daher ist eine Kombination des GPS mit anderen, bewährten Positionssensoren, wie z.B. Odometer, Achszähler, Baken, Trägheisplattformen oder Radarsensoren, zur Bildung von Mehrfachsensorsystemen erwägenswert.

Derzeit werden derartige Mehrfachsensorsysteme meist lediglich wie (mehrfach) redundant ausgelegte Einzelsysteme behandelt. Eine Optimierung der Positionsermittlung mit synergistischer Leistungssteigerung ist dagegen noch nicht bekannt geworden.

Außerdem erfolgt die Signalverarbeitung von Mehrfachsystemen bisher nur durch eine einzige Zustandsschätzung (vgl. z.B. Bäumker, "DGPS-gestütztes Fahrzeugnavigationssystem mit faseroptischen Kreiseln", Zeitschrift für satellitengestützte Positionierung, Navigation und Kommunikation, 12/95, Wichmann Verlag) in einem mehrdimensionalen Zustandsraum, so daß ein zeitlich multimodales Verhalten des Systems nicht vollständig erfaßt werden kann.

Die Aufgabe der Erfindung besteht in der Schaffung eines Verfahrens der eingangs genannten Art, das unter synergistischer und kombinatorischer Auswertung mehrerer sensorindividueller Ortsangaben eine optimierte Objektpositionsbestimmung ermöglicht.

Diese Aufgabe wird erfindungsgemäß durch die in den Patentansprüchen 1 und 2 angegebenen Verfahren gelöst.

In üblicher Ortungstechnik werden die Meßgrößen der einzelnen Ortungssensoren (z.B. Weglänge/Odometer; GPS) getrennt erfaßt und stehen nach Meßwertaufbereitung als individuelle Positionsangaben zur Verfügung. Außerdem werden statistische Angaben über die Sensoren - wie Drift- und Diffusionswerte - (Varianzen) bereitgestellt, die im einfachsten Fall Datenblättern als konstante Größen entnommen werden können. Die individuellen Positionsangaben und statistischen Angaben eines Sensors werden nachfolgend als (sensorindividuelle) "sensorische Informationen" bezeichnet.

Ein erster Vorteil der erfindungsgemäßen Verfahren besteht darin, daß durch Vergleich der jeweiligen auswertezeitpunktaktuell ermittelten Objektpositionen mit der Vorhersage (Prädiktion) zum vorhergehenden Auswertezeitpunkt und durch permanenten Vergleich der Sensoren untereinander die Meßgüte jedes einzelnen Sensors kontinuierlich erfaßt wird (permanente autarke Güte-Bewertung). Dadurch lassen sich unbrauchbar schlechte Positionsangaben automatisch ausfiltern. Diese vorteilhafte Verfahrenseigenschaft basiert auf dem erfindungsgemäßen Einsatz global approximierender (nichtlinearer) Optimalfilter und stellt einen wesentlichen Aspekt der Erfindung dar.

Ein weiterer wesentlicher Vorteil der Erfindung besteht darin, daß sensorartbedingte, aber auch vorübergehende oder langzeittypische Verschlechterungen der Sensorgüte bei der Ermittlung der Objektposition adäquat berücksichtigt werden.

Die erfindungsgemäßen Verfahren verwerten jede Sensorinformation und sind hinsichtlich Anzahl, Art und Qualität der eingesetzten Sensoren offen. Dadurch können für jeden unterschiedlichen Einsatzfall spezifisch angepaßte Sensorsysteme eingesetzt, bedarfsweise ausgetauscht oder ergänzt werden. Die fehlertolerante, redundante Auslegung erfolgt autark. Fehlerberechnungen mittels aufwendiger experimenteller Analysen entfallen. Ebenso kann auf Klassifikationskriterien verzichtet werden, die einen Sensor als fehlerhaft einstufen.

Vorteilhafterweise können mehrere preiswerte Sensoren verwendet werden und dennoch - statistisch über einen längeren Zeitraum betrachtet - Ortsinformationen von besserer Güte als ein einziger hochwertiger (und damit teurer) Sensor erzeugen.

Eine verfahrenstechnisch bevorzugte Realisierungsmöglichkeit des erfindungsgemäßen Verfahrens ist in Anspruch 3 angegeben.

Bei der Verfahrensdurchführung kann die Anzahl der zu verarbeitenden Werte (Filterdichten) mit der Zahl der Abtastschritte erheblich zunehmen. Eine in dieser Hinsicht bevorzugte Ausgestaltung des erfindungsgemäßen Verfahrens sieht vor, daß der Werteumfang der Filterdichte vor ihrer anschließenden Verwendung als Prädiktionsdichte reduziert wird.

Die Erfindung wird nachfolgend anhand einer Zeichnung beispielhaft weiter erläutert; es zeigen:

Figur 1 ein Sensorsystem mit Verarbeitungseinrichtung,
Figur 2 zeitliche Drift und Diffusion eines bewegten Objekts,

Figur 3 das Ergebnis einer Optimalfilterung,
Figur 4 die Bildung einer Meßdichte aus den Informationen mehrerer Sensoren,
Figur 5 das Prinzip einer Dichtenreduktion und
Figur 6 eine zusammenfassende Darstellung des Verfahrens.

Gemäß Figur 1 basiert das erfindungsgemäße Verfahren auf der Auswertung individueller sensorischer Informationen I1...In von n Sensoren S1 bis Sn. Diese stellen Meßwerte (Positionsangaben) P1 bis Pn zur Ortsermittlung und sensorindividuelle statistische Angaben σ1...σn über ihre Güte bereit (zusammenfassend als sensorische Informationen I1... In bezeichnet). Die Sensoren können z.B. als GPS, Odometer, Ballise, Gyro, Radar-/ Laser-Detektor etc. realisiert sein. Die sensorindividuellen Positionsangaben weisen in Abhängigkeit von der Sensorgüte unterschiedliche Zuverlässigkeiten auf, so daß sich statistische Wahrscheinlichkeiten bzw Wahrscheinlichkeitsdichten für die jeweilige Position ergeben; diese werden nachfolgend auch als "Einzelmeßdichten" bezeichnet. Die individuellen Positionsangaben werden einer Verarbeitungseinrichtung (Multipositionsserver) MS zur Auswertung und weiteren Verarbeitung zugeführt. Wie nachfolgend näher erläutert, stellt die Verarbeitungseinrichtung MS ausgangsseitig die jeweils aktuelle Objektposition OP bereit, die beispielsweise zur Anzeige gebracht, einem Bordcomputer BC zugeführt oder als Korrektursignal KS zur Nachführung (update) einzelner Sensoren verwendet werden kann.

Einführend soll zum leichteren Verständnis zunächst nur der Fall eines einzigen Sensors (unimodaler Fall) behandelt werden. Das zu ortende, dynamische System (z.B. ein fahrender Zug) wird durch ein Systemmodell und das Sensorsystem durch ein Meßmodell beschrieben.

Für den zu schätzenden Ort bzw. den ein- oder zweidimensionalen Zustandsvektor $\bar{\mathbf{r}}$ ergibt sich zwischen zwei infinitesimalen Abtastschritten (nachfolgend Auswertezeitpunkte genannt) die elementare Markov-Beziehung:

$$\bar{r}(t_i + \Delta t) = \bar{r}(t_i) + \Delta s \cdot \bar{r}^o_\Delta + \bar{\omega}(\Delta t);\ \text{mit } \Delta t: = t_{i+1} - t_i,\ t_i < t_{i+1} \qquad (1)$$

Dabei ist:

**$t_{i+1}$** Zeitpunkt, zu dem die nächste sensorische Information eintrifft (nächster Auswertezeitpunkt)

**$\bar{r}^o_\Delta$** Einheitsvektor in Richtung der inkrementalen Fahrwegtrajektorie

$$\left(\bar{r}(t_i + \Delta t) - \bar{r}(t_i)\right)$$

**$\Delta s = v \cdot \Delta t$** Weglängenelement (Produkt von Objektgeschwindigkeit v und Zeitraum **$\Delta t$** zwischen zwei Abtastzeitpunkten

**$\bar{\omega}(\Delta t)$** Summe der während **$\Delta t$** auftretenden stochastischen Fehler (Rauschen). Der Erwartungswert von $\bar{\omega}$ ist Null: $\langle \bar{\omega}(\Delta t) \rangle = 0$

Das Rauschen $\bar{\omega}(\Delta t)$ in Gleichung (1) stellt die Gesamtheit aller auf das Fahrzeug im Zeitraum **$\Delta t$** einwirkenden stochastischen Einflüsse dar (z.B. statistische Fehler der Sensor-, Navigations- und Anzeigesysteme, Einflüsse im Rad-Fahrweg-Kontakt und aerodynamische Einflüsse). Bildet man in Gleichung (1) das Scharmittel ⟨...⟩ über alle Musterfunktionen von $\{\bar{\omega}(\Delta t)\}$, so erhält man:

$$\langle \bar{r}(t_i + \Delta t) \rangle = \langle \bar{r}(t_i) \rangle + \langle \Delta \bar{r}(\Delta t) \rangle \text{ mit } \langle \Delta \bar{r}(\Delta t) \rangle : = \langle \Delta s \rangle \cdot \bar{r}^o_\Delta \qquad (2)$$

Man kann $\bar{\omega}$ als gaußsches weißes Rauschen ansetzen mit:

$$\langle\langle \bar{\omega}(t_i) \cdot \bar{\omega}^T(t_j) \rangle\rangle = \underline{\underline{Q}}(t_i) \cdot d_{ij} \text{ und } \underline{\underline{Q}}\text{: Kovarianzmatrix des Rauschens} \qquad (3)$$

Damit können System (Gleichung 2) und Messung durch gaußsche Wahrscheinlichkeits-Verteilungsdichten (Aufenthaltswahrscheinlichkeitsdichten) beschrieben werden, die vollständig durch Erwartungswert bzw. 1. Moment

und Kovarianz (-Matrix) bzw. 2. Moment charakterisiert sind.

Die zeitliche Evolution der Systemdichte ist durch Drift, d.h. durch die Bewegung des Erwartungswertes, also des Objekts selbst, und Diffusion, d.h. Vergrößerung der Varianz mit der Zeit - entsprechend der Abnahme der Lokalisierungsschärfe - gegeben.

Die sich vom aktuellen Auswertezeitpunkt $\mathbf{t_i}$ bis zum nächsten Auswertezeitpunkt $\mathbf{t_{i+1}}$ ohne Berücksichtigung der Messung entwickelnde Systemdichte wird nachfolgend Prädiktionsdichte $\rho_P$ genannt (vgl. V. Krebs, "Nichtlineare Filterung, Oldenbourg Verlag, München 1980).

$$\rho_P(\bar{r},t) = \frac{1}{2\pi\sqrt{|\underline{\underline{P}}|}} \exp\left[-\frac{1}{2}\cdot\left(\bar{r}-\langle\bar{r}\rangle_P\right)^T \cdot \underline{\underline{P}}^{-1}\cdot\left(\bar{r}-\langle\bar{r}\rangle_P\right)\right] \qquad (4)$$

T: Transponentiation

$\langle\bar{r}\rangle_P$ Erwartungswert (1.Moment) von $\rho_P(\bar{r},t)$

$\underline{\underline{P}}$ Kovarianzmatrix (2.Moment) von $\rho_P(\bar{r},t)$

Die zeitliche Veränderung von $\langle\bar{r}\rangle_p$ entspricht der Eigenbewegung des Systems, vgl. auch Gleichung (2):

$$\langle\bar{r}\rangle_P(t+\Delta t) = \langle\bar{r}\rangle_P(t) + \langle\Delta\bar{r}(\Delta t)\rangle, \text{ mit } \langle\Delta\bar{r}(\Delta t)\rangle : \text{Driftanteil, 1,}$$

$$\Leftrightarrow \langle\bar{r}\rangle_P(t_{i+1}) = \langle\bar{r}\rangle_P(t_i) + \langle\Delta\bar{r}(t_{i+1}-t_1)\rangle, \qquad t_{i+1}-t_i = \Delta t \qquad (5)$$

Die Kovarianzmatrix $\underline{\underline{P}}$ ist ein Maß für die zeitliche Formveränderung der Dichte $\rho_P(\bar{r},t)$ - d.h. der Verbreiterung und Abflachung entsprechend der Abnahme der Informations- bzw. Lokalisierungsschärfe oder Verengung und Erhöhung entsprechend der Zunahme der Informations- bzw. Lokalisierungsschärfe - mit $\rho(\bar{r},t) = \delta(\bar{r},t)$ als Grenzfall:

$$\underline{\underline{P}}(t+\Delta t) = \underline{\underline{P}}(t) + \underline{\underline{Q}}(\Delta t) \qquad (6a)$$

mit $\underline{\underline{Q}}$ als Kovarianzmatrix des gaußschen Systemrauschens $\bar{\omega}$, vgl. auch Gleichung (3).

Beispielhaft ergibt sich für $\underline{\underline{Q}}$ im zweidimensionalen Fall:

$$\underline{\underline{Q}}(t) = \begin{pmatrix} \sigma_{11}^2(\Delta t) & \sigma_{12}^2(\Delta t) \\ \sigma_{21}^2(\Delta t) & \sigma_{22}^2(\Delta t) \end{pmatrix}, \qquad \sigma_{ij}^2(\Delta t) = D_{ij}\cdot\Delta t\,, \qquad (6b)$$

$D_{ij}$ : Diffussionskonstanten

Im eindimensionalen Fall kann $\sigma(\Delta t) = \sqrt{D\cdot\Delta t}$ angesetzt werden, wobei **D** = const (Dimension: 'Längenquadrat/Zeit') sich aus dem Diffusionsverhalten des Gesamtsystems (Figur 1) bestimmt und über einen Vorgabewert festzulegen ist. Ist z.B. einer der Sensoren ein Inertial Navigation System (Gyro), so kann mit deren Diffusionswerten gemäß Datenblatt gerechnet und die Vereinfachung $D_{11} = D_{22} \Rightarrow \sigma_{11} = \sigma_{22}$ und $\sigma_{12} = \sigma_{21} \equiv 0$ (verschwindende Kreuzkovarianzen) vorgenommen werden.

Das Drift- und Diffusionsverhalten der Systemdichte veranschaulicht Figur 2.

Im unimodalen Fall ist nur ein einziger Sensor und damit nur eine einzige Meßdichte $\rho_M$ vorhanden:

$$\rho_M(\bar{r},t) = \frac{1}{2\pi\sqrt{|\underline{\underline{R}}|}} \exp\left[-\frac{1}{2}\cdot\left(\bar{r}-\langle\bar{r}\rangle_M\right)^T \cdot \underline{\underline{R}}^{-1} \cdot \left(\bar{r}-\langle\bar{r}\rangle_M\right)\right] \quad (7)$$

Die Momente $\langle\bar{r}\rangle_M$ und $\underline{\underline{R}}$ bestimmen sich aus der sensorischen Information, die der Sensor zum Zeitpunkt t zur Verfügung stellt, wobei die Komponenten des Erwartungswertes $\langle\bar{r}\rangle_M$ den Ortsanteil (ein- oder zweidimensional) und die Komponenten der Meß-Kovarianzmatrix $\underline{\underline{R}}$ den statistischen Anteil der sensorischen Information bilden. $\underline{\underline{R}}$ als Kovarianzmatrix des Meßrauschens wird in gleicher Weise wie $\underline{\underline{Q}}$ konstruiert (analog Gleichung (6b)).

Zur weiteren Erläuterung wird davon ausgegangen, daß zum Auswertezeitpunkt $\mathbf{t = t_i}$ die bestimmenden Werte von System und Messung vorliegen, also die Dichten gemäß Gleichung (5) bis (7) ermittelbar sind. Das Produkt aus gaußscher System- und Meßdichte (Bayessche Regel) zu diesem Auswertezeitpunkt $\mathbf{t = t_i}$ ist dann ebenfalls eine gaußsche Dichte, die nachfolgend als Filterdichte $\rho_{Fil}$ bezeichnet wird, deren erstes und zweites Moment mit den Kalmanfilter-Gleichungen identisch ist:

$$\rho_{Fil}(\bar{r},t) = c\cdot\rho_P(\bar{r},t)\cdot\rho_M(\bar{r},t) = \frac{c}{4\pi^2\sqrt{|\underline{\underline{P}}||\underline{\underline{R}}|}} \exp\left[-\frac{1}{2}\left(\bar{r}-\langle\bar{r}\rangle_{Fil}\right)^T \cdot \underline{\underline{P}}_{Fil}^{-1} \cdot \left(\bar{r}-\langle\bar{r}\rangle_{Fil}\right)+\gamma\right] \quad (8)$$

dabei ist c ein Normierungsfaktor, der dafür sorgt, daß gilt:

$$\int_{-\infty}^{\infty}\int_{-\infty}^{\infty} \rho_{Fil}(\bar{r},t)\, d^2r = 1$$

(Normierung der gaußschen Dichte).

Koeffizientenvergleich von linker und rechter Seite in Gleichung (8) ergibt:

$$\langle\bar{r}\rangle_{Fil} := \langle\bar{r}\rangle_P(t) + \underline{\underline{P}}_{Fil}\cdot\underline{\underline{R}}^{-1}(t)\cdot\left(\langle\bar{r}\rangle_M(t)-\langle\bar{r}\rangle_P(t)\right)$$

[1. Moment von $\rho_{Fil}$ zum Auswertezeitpunkt t]

$$\underline{\underline{P}}_{Fil} := \left(\underline{\underline{P}}^{-1}(t)+\underline{\underline{R}}^{-1}(t)\right)^{-1}$$

[2. Moment von $\rho_{Fil}$ zum Auswertezeitpunkt t]

$$\gamma := \left(\langle\bar{r}\rangle_M(t)-\langle\bar{r}\rangle_P(t)\right)^T\cdot\underline{\underline{P}}^{-1}\cdot\underline{\underline{P}}_{Fil}\cdot\underline{\underline{R}}^{-1}(t)\cdot\left(\langle\bar{r}\rangle_M(t)-\langle\bar{r}\rangle_P(t)\right) \text{ additiver Eichterm} \quad (9)$$

Mit Einfließen der Messung zum Zeitpunkt $\mathbf{t = t_i}$ wird also aus der Prädiktionsdichte $\rho_P$ die Filterdichte $\rho_{Fil}$, welche im nächsten Zeitschritt - vom Auswertezeitpunkt $\mathbf{t_i}$ auf den Auswertezeitpunkt $\mathbf{t=t_{i+1}}$ - als neue Prädiktionsdichte fungiert. Der Erwartungswert $\langle\bar{r}\rangle_{Fil}$ ist der neue optimierte Schätzort, d.h. die nunmehr aktuell neu ermittelte Objektposition. Dieser Sachverhalt ist in Figur 3 schematisch dargestellt.

Der Erwartungswert $\langle\bar{r}\rangle_{Fil}$ zeichnet sich durch die minimale Varianz des Schätzfehlers aus; Figur 3 zeigt dies durch die Schlankheit der Filterdichte $\rho_{Fil}$. Die Ausdrücke für $\langle\bar{r}\rangle_{Fil}$ und $\underline{\underline{P}}_{Fil}$ in Gleichung (9) korrespondieren mit den klassischen

Kalmanfiltergleichungen. Letztere liefern jedoch keine Informationen über Filterwichtungen und sind daher im multimodalen Fall nicht brauchbar.

Derartige Wichtungen werden dagegen beim erfindungsgemäßen Verfahren vorteilhafterweise durch die mit dem Term $\gamma$ in Gleichung (9) bezeichneten Größen vorgenommen; dies stellt einen ganz wesentlichen Aspekt des erfindungsgemäßen Verfahrens dar.

Nachfolgend wird zur Erläuterung des Verfahrens bei Einsatz mehrerer verschiedener Sensoren Bezug wieder auf die Figur 1 und auf Figur 4 genommen, die das Sensorsystem darstellen. Gemäß Figur 4 ist bei mehreren Sensoren $S_1$ bis $S_n$ (multimodale Meßwertverarbeitung) die Meßdichte $\rho_M$ die Summe aus (n) Einzelmeßdichten $\rho_M^{(i)}$, i=1,..n, die verfahrensgemäß mit der Prädiktionsdichte $\rho_P$ gemäß Gleichung (8) kombiniert wird:

$$\rho_M = \sum_{i=1}^{n} \rho_M^{(i)}\ ,\ \rho_M^{(i)}(\bar{r},t) = \frac{1}{2\pi\sqrt{\left|\underline{\underline{R}}_{(i)}\right|}} \exp\left[-\frac{1}{2}\cdot\left(\bar{r}-\langle\bar{r}\rangle_M^{(i)}(t)\right)^T\cdot\underline{\underline{R}}_{(i)}^{-1}(t)\cdot\left(\bar{r}-\langle\bar{r}\rangle_M^{(i)}(t)\right)\right] \qquad (10)$$

Dabei kann wegen der relativ geringen Geschwindigkeiten insbesondere des landgestützten Verkehrs davon ausgegangen werden, daß zum Zeitpunkt t alle sensorindividuellen Positionsangaben vorliegen. Die genaue Festlegung der Abtastrate (zeitlicher Abstand der Auswertezeitpunkte) bestimmt sich aus der niedrigsten und höchsten Abtastfrequenz der jeweiligen Sensoren sowie der Rechentotzeit.

Mit den Gleichungen (8) und (10) ist die Filterdichte $\rho_{Fil}$ ebenfalls eine Summe entsprechender Einzelfilterdichten. Diese Summen-Filterdichte übernimmt beim Übergang auf den nächsten Zeitschritt die Rolle der Prädiktionsdichte $\rho_P$, so daß auch $\rho_P$ eine Summe entsprechender Einzeldichten ist:

$$\rho_P(\bar{r},t) = \sum_{j=1}^{\hat{n}} \rho_P^{(j)}(\bar{r},t)\ ,$$

$$\rho_P^{(j)}(\bar{r},t) = \frac{w_j}{2\pi\sqrt{\left|\underline{\underline{P}}_{(j)}\right|}} \exp\left[-\frac{1}{2}\cdot\left(\bar{r}-\langle\bar{r}\rangle_P^{(j)}(t)\right)^T\cdot\underline{\underline{P}}_{(j)}^{-1}(t)\cdot\left(\bar{r}-\langle\bar{r}\rangle_P^{(j)}(t)\right)\right] \qquad (11)$$

wobei $\mathbf{w_j}$ Wichtungsfaktoren sind mit

$$\sum_{j=1}^{\hat{n}} w_j = 1\ .$$

Allgemein erhält man damit zu einem beliebigen Auswertezeitpunkt:

$$\rho_{Fil} = c\cdot\left[\sum_{i=1}^{n}\rho_M^{(i)}\right]\cdot\left[\sum_{j=1}^{\hat{n}}\rho_P^{(j)}\right] = c\cdot\sum_{i,j=1}^{n,\hat{n}} w_{ij}\cdot\exp\left[-\frac{1}{2}\cdot\left(\bar{r}-\langle\bar{r}\rangle_{Fil}^{(i,j)}\right)^T\cdot\underline{\underline{P}}_{Fil}^{(i,j)-1}\cdot\left(\bar{r}-\langle\bar{r}\rangle_{Fil}^{(i,j)}\right)\right] \qquad (12)$$

mit den Momenten

$$\langle\bar{r}\rangle_{Fil}^{(i,j)} := \langle\bar{r}\rangle_P^{(j)}(t) + \underline{\underline{P}}_{Fil}^{(i,j)}\cdot\underline{\underline{R}}_{(i)}^{-1}(t)\cdot\left(\langle\bar{r}\rangle_M^{(i)}(t)-\langle\bar{r}\rangle_P^{(j)}(t)\right)$$

[1. Moment von $\rho_{Fil}$ zum Auswertezeitpunkt t] und

$$\underline{\underline{P}}_{Fil}^{(i,j)} := \left(\underline{\underline{P}}_{(j)}^{-1}(t) + \underline{\underline{R}}_{(i)}^{-1}(t)\right)^{-1}$$

[2. Moment von $\rho_{Fil}$ zum Auswertezeitpunkt t] sowie den Wichtungsfaktoren

$$w_{ij} = \frac{w_j}{4\pi^2\sqrt{\left|\underline{\underline{R}}_{(i)}\right|\left|\underline{\underline{P}}_{(j)}\right|}} \exp\left\{-\frac{1}{2}\left(\langle\bar{r}\rangle_M^{(i)} - \langle\bar{r}\rangle_P^{(j)}\right)^T \cdot \underline{\underline{P}}_{(j)}^{-1} \cdot \underline{\underline{P}}_{Fil}^{(i,j)} \cdot \underline{\underline{R}}_{(i)}^{-1} \cdot \left(\langle\bar{r}\rangle_M^{(i)} - \langle\bar{r}\rangle_P^{(j)}\right)\right\}$$

Die Momente $\langle\bar{r}\rangle_{Fil}^{(i,j)}$ und $\underline{\underline{P}}_{Fil}^{(i,j)}$ der Einzelfilterdichten werden also analog Gleichung (8) und (9) berechnet. Die Summenindices i und j müssen nicht notwendig gleich sein. Nach Berechnung von $\langle\bar{r}\rangle_{Fil}^{(i,j)}$ und $\underline{\underline{P}}_{Fil}^{(i,j)}$ für alle Kombinationen (i,j) kann die

Doppelsumme in Gleichung (12) als normierte Einfachsumme über einen Mitlaufindex 1 ausgedrückt werden:

$$\rho_{Fil}(\bar{r},t) = c \cdot \sum_l \frac{w_l^{norm}}{2\pi\sqrt{\left|\underline{\underline{P}}_{Fil}^{(l)}\right|}} \cdot \exp\left[-\frac{1}{2}\cdot\left(\bar{r} - \langle\bar{r}\rangle_{Fil}^{(l)}\right)^T \cdot \underline{\underline{P}}_{Fil}^{(l)-1} \cdot \left(\bar{r} - \langle\bar{r}\rangle_{Fil}^{(l)}\right)\right] \quad (13)$$

mit (i,j) $\rightarrow$ l und

$$w_l^{norm} = \frac{w_l \cdot \left|\underline{\underline{P}}_{Fil}^{(l)}\right|}{\sum_{\tilde{l}} w_{\tilde{l}} \cdot \left|\underline{\underline{P}}_{Fil}^{(\tilde{l})}\right|}$$

mit

$$\sum_l w_l^{norm} = 1$$

Damit ergibt sich für die aktuelle Objektposition:

$$\langle\bar{r}\rangle_{ges} = \sum_l w_l^{norm} \cdot \langle\bar{r}\rangle_{Fil}^{(l)} \quad (14)$$

Für die zugehörige Gesamtkovarianzmatrix $\underline{\underline{P}}_{ges}$ ergibt sich mit Gleichung (14):

$$\underline{\underline{P}}_{ges} = \sum_l w_l^{norm} \cdot \left\{\underline{\underline{P}}_{Fil}^{(l)} + \left(\langle\bar{r}\rangle_{Fil}^{(l)} - \langle\bar{r}\rangle_{ges}\right)\cdot\left(\langle\bar{r}\rangle_{Fil}^{(l)} - \langle\bar{r}\rangle_{ges}\right)^T\right\} \quad (15)$$

Der aus Gleichung (15) bestimmbare skalare Wert

$$\left\|\underline{\underline{P}}_{ges}\right\| \in \mathrm{IR}$$

stellt ein Referenzmaß für die Filtergüte dar.

Zur Ableitung der Gleichungen (14) und (15) soll noch folgendes ergänzt werden: Setzt man

$$\rho(\vec{r}) = \sum_{i} w_i \cdot \rho^{(i)}(\vec{r})$$

als Summendichte gemäß Gleichung (13) in die allgemeinen Erwartungswert-Definitionen (siehe u.a. Bronstein, "Taschenbuch der Mathematik")

$$(1) \qquad \langle \vec{r} \rangle := \int_{-\infty}^{\infty}\int_{-\infty}^{\infty} \vec{r} \cdot \rho(\vec{r})\, d^2r$$

$$(2) \qquad \underline{P} := \int_{-\infty}^{\infty}\int_{-\infty}^{\infty} [\vec{r} - \langle \vec{r} \rangle] \cdot [\vec{r} - \langle \vec{r} \rangle]^T \rho(\vec{r})\, d^2r$$

ein, ergeben sich nach Anwendung der Erwartungswert-Rechenregeln die Gleichung (14) und (15) unmittelbar.

Weil die Wichtungsfaktoren $\mathbf{w_{ij}}$ von den Residuen der Meßinformationen (Sensoren) bestimmt werden, erhalten die Sensorsignale um so stärkes bzw. geringereres Gewicht, je besser bzw. schlechter die Meßgüte ist. Das systemimmanente Maß diese Meßgüte bestimmt sich einerseits aus dem mit der Meßhistorie behafteten Vergleich der Meßinformation mit der Systeminformation (iteratives Procedere der Multimodalfilterung) und andererseits aus dem Vergleich der Sensorinformationen untereinander (systemimmanente Wichtungen).

Die Gleichungen (12) und (13) stellen einen Parallelbetrieb ebensovieler Kalmanfilter dar, wie Terme in der gaußschen Doppelsumme vorhanden sind. Wie Gleichung (12) zeigt, nimmt die Zahl der Filterdichten exponentiell mit der Zahl der Abtastschritte zu. Damit wird das vollständige Wissen der statistischen Evolution zum Ausdruck gebracht, was einen wesentlichen Vorteil des erfindungsgemäßen Verfahrens ausmacht. Im Hinblick auf die praktische Realisierung mit vergleichsweise leistungsschwachen Hardware-Komponenten ist eine Filterdichten-Reduktion vorteilhaft. Diese kann wie nachfolgend erläutert zweistufig durchgeführt werden.

Im 3σ-Bereich liegen mit 99,6%-iger Wahrscheinlichkeit die Werte einer normalverteilten Zufallsvariablen; diese sind bei zweidimensionalen gaußschen Dichten von der sog. 3σ-Ellipse umschlossen. Dementsprechend stellen Werte außerhalb dieses Bereichs dreifacher Streuung ($\sigma^2$ = Varianz) keine verwertbare Information mehr dar. Daher werden in einer ersten Stufe zur Filterdichten-Reduktion Einzel-Prädiktionsdichten eliminiert, innerhalb deren 3σ-Grenzen keine Positionsangaben (Sensorwerte) liegen.

Eine zweite effektive und besonders bevorzugte Reduktionsstufe wird nachfolgend ausgehend von einer Gleichung (12) bzw. (13) entsprechenden Summe von n-normierten gaußschen Dichten erläutert:

$$\rho(\vec{r}) = \sum_{i=1}^{n} w_i \cdot \rho^{(i)}(\vec{r}) \qquad (16)$$

mit

$$\sum_{i=1}^{n} w_i = 1\ ;$$

und den Gesamtmomenten $\langle \vec{\mathbf{r}} \rangle$ und $\underline{\mathbf{P}}$ (gemäß Gleichung (14) und (15)).

Die Dichte $\rho(\vec{\mathbf{r}})$ in (16) soll durch eine Dichte $\tilde{\rho}\,(\vec{r})$ mit einer geringeren Anzahl $\tilde{n}$ gaußscher Summanden approximiert werden:

$$\tilde{\rho}(\vec{r}) = \sum_{i=1}^{\tilde{n}} \tilde{w}_i \cdot \tilde{\rho}^{\,(i)}(\vec{r}) \qquad (17)$$

mit $\mathbf{1} \leq \tilde{\mathbf{n}} \leq \mathbf{n}$ und den Gesamtmomenten $\langle\tilde{\bar{r}}\rangle$ und $\underline{\underline{\tilde{P}}}$.

Da das Variationsproblem

$$\Delta_{ges} := \int_{-\infty}^{\infty}\int_{-\infty}^{\infty} \left|\rho(\bar{r}) - \tilde{\rho}(\bar{r})\right|^2 d^2r \rightarrow 0$$

nicht geschlossen lösbar ist unter der Nebenbedingung, daß die Normierung und die Gesamtmomente erhalten bleiben gemäß $\langle\bar{r}\rangle = \langle\tilde{\bar{r}}\rangle$ und $\underline{\underline{P}} = \underline{\underline{\tilde{P}}}$ (vgl. H. W. Sorenson; D. L. Alspach, "Recursive Bayesian estimation using Gausian sums", IEEE Trans. on Automative Control, 1972), werden schrittweise immer diejenigen Summanden $\mathbf{w_k}\cdot\rho^{(\mathbf{k})}(\bar{\mathbf{r}})$ und $\mathbf{w_1}\cdot\rho^{(\mathbf{l})}(\bar{\mathbf{r}})$ der Dichte $\rho(\bar{r})$ aus Gleichung (16) zu einer resultierenden Dichte $\mathbf{w_{kl}}\cdot\rho^{(\mathbf{k,l})}(\bar{\mathbf{r}})$ zusammengefaßt, für die der Approximationsfehler

$$\Delta_{kl} := \int_{-\infty}^{\infty}\int_{-\infty}^{\infty}\left(w_{kl}\rho^{(k,l)}(\bar{r}) - \left(w_k\rho^{(k)}(\bar{r}) + w_l\rho^{(l)}(\bar{r})\right)\right)^2 d^2r \qquad (18)$$

minimal ist. Dies ist in Figur 5 schematisch dargestellt.

Gleichung (18) ist im einzelnen wie folgt ableitbar:

$$\begin{aligned}\Delta_{kl} &:= \int_{-\infty}^{\infty}\int_{-\infty}^{\infty}\left\{w_{kl}\rho^{(k,l)}(\bar{r}) - \left(w_k\rho^{(k)}(\bar{r}) + w_l\rho^{(l)}(\bar{r})\right)\right\}^2 d^2r = \\ &= \int_{-\infty}^{\infty}\int_{-\infty}^{\infty}\left(w_k\rho^{(k)}(\bar{r})\right)^2 d^2r + \int_{-\infty}^{\infty}\int_{-\infty}^{\infty}\left(w_l\rho^{(l)}(\bar{r})\right)^2 d^2r + \int_{-\infty}^{\infty}\int_{-\infty}^{\infty}\left(w_{kl}\rho^{(k,l)}(\bar{r})\right)^2 d^2r - \\ &\quad - 2\int_{-\infty}^{\infty}\int_{-\infty}^{\infty} w_k\rho^{(k)}(\bar{r})\cdot w_{kl}\rho^{(k,l)}(\bar{r})\, d^2r - 2\int_{-\infty}^{\infty}\int_{-\infty}^{\infty} w_l\rho^{(l)}(\bar{r})\cdot w_{kl}\rho^{(k,l)}(\bar{r})\, d^2r + \\ &\quad + 2\int_{-\infty}^{\infty}\int_{-\infty}^{\infty} w_k\rho^{(k)}(\bar{r})\cdot w_l\rho^{(l)}(\bar{r})\, d^2r\end{aligned}$$

Das Fehlerintegral besteht somit aus 6 Summanden des Typs

$$\int_{-\infty}^{\infty}\int_{-\infty}^{\infty}\rho^{(i)}\rho^{(j)}\, d^2r$$

mit

$$\rho^{(i)}, \rho^{(j)} \in \{\rho^{(k)}, \rho^{(l)}, \rho^{(k,l)}\}.$$

Diese Integrale zweier normierter gaußscher Dichten lassen sich elementar bestimmen zu :

$$\int_{-\infty}^{\infty}\int_{-\infty}^{\infty}\rho^{(i)}\rho^{(j)}\, d^2r = \frac{1}{2\pi}\sqrt{\frac{\left|\underline{\underline{P}}_{ij}\right|}{\left|\underline{\underline{P}}_i\cdot\underline{\underline{P}}_j\right|}}\cdot\exp\left\{-\frac{1}{2}\gamma_{ij}\right\}$$

(Bronstein, "Taschenbuch der Mathematik") mit:

$$\underline{\underline{P}}_{ij} := (\underline{\underline{P}}^{-1} + \underline{\underline{P}}_j^{-1})^{-1}$$

$$\gamma_{ij} := \left(\langle\bar{r}\rangle^{(i)} - \langle\bar{r}\rangle^{(j)}\right)^T \cdot \underline{\underline{P}}_i^{-1} \cdot \underline{\underline{P}}_{ij} \cdot \underline{\underline{P}}_j^{-1} \cdot \left(\langle\bar{r}\rangle^{(i)} - \langle\bar{r}\rangle^{(j)}\right)$$

Bedingung für $\mathbf{w_{kl}}$ und $\rho^{(k,l)}$ ist auch hier, daß Normierung und Gesamtmomente der ganzen Summe $\rho(\bar{\mathbf{r}})$ erhalten bleiben. Diese Bedingungen sind erfüllt mit

$$w_{kl} = w_k + w_l, \qquad k,l \in [1,n]$$

$$\langle\bar{r}\rangle^{(k,l)} = \frac{1}{w_{kl}}\left(w_k\langle\bar{r}\rangle^{(k)} + w_l\langle\bar{r}\rangle^{(l)}\right) \tag{19}$$

$$\underline{\underline{P}}^{(k,l)} = \frac{w_k}{w_{kl}}\left\{\underline{\underline{P}}^{(k)} + \left(\langle\bar{r}\rangle^{(k)} - \langle\bar{r}\rangle^{(k,l)}\right)\cdot\left(\langle\bar{r}\rangle^{(k)} - \langle\bar{r}\rangle^{(k,l)}\right)^T\right\} + \frac{w_l}{w_{kl}}\left\{\underline{\underline{P}}^{(l)} + \left(\langle\bar{r}\rangle^{(l)} - \langle\bar{r}\rangle^{(k,l)}\right)\cdot\left(\langle\bar{r}\rangle^{(l)} - \langle\bar{r}\rangle^{(k,l)}\right)^T\right\}$$

Den Gleichungssatz (19) erhält man mit n=2 unmittelbar aus den Gleichungen (14); (15). Es läßt sich dazu leicht zeigen, daß der resultierende Erwartungswert $\langle\bar{r}\rangle$ und die resultierende Kovarianzmatrix $\underline{\underline{\mathbf{P}}}$ nach Bündelung eines Paares beliebiger Summanden $\rho^{(k)}$, $\rho^{(l)}$, $\mathbf{k \neq 1}$, der Summendichte $\rho$ (G1. 16) unverändert bleiben.

Die Reduktion von n- auf $\tilde{\mathbf{n}}$-Summenglieder erfolgt durch wiederholte Paarbündelung (Figur 5). Die zu bündelnden Dichtenpaare werden also durch eine resultierende Dichte mit den unter Gleichung (19) aufgeführten Momenten ersetzt

Der Approximationsfehler $\Delta_{\mathbf{kj}}$ braucht dabei für Paare, bei denen beide Partner an den bis dahin erfolgten Bündelungen noch nicht beteiligt waren, natürlich nicht erneut berechnet zu werden. Bevorzugt sollte die Summandenzahl der Prädiktionsdichte etwa der Anzahl der Sensoren, d.h. der Summandenzahl der Meßdichte (Figur 4) entsprechen.

Abschließend wird unter Bezugnahme auf Figur 6 das Verfahren im Zusammenhang dargestellt. Die von den einzelnen Sensoren S1 bis Sn gelieferten individuellen Positionsangaben P1 bis Pn werden zu bestimmten Auswertezeitpunkten unter Bildung einer Summenmeßdichte $\rho_{\mathbf{M}}$ (vgl. Figur 4) zusammengefaßt (Meßmodell). Unter Berücksichtigung der Dynamik des bewegten Objekts OBJ wird von der zum aktuellen Auswertezeitpunkt ermittelten Objektposition ausgehend zumindest eine Prädiktionsdichte $\rho_{\mathbf{P}}$ erzeugt, die eine Objektpositionsschätzung für den nach dem aktuellen derzeitigen Auswertezeitpunkt folgenden (nächsten) Auswertezeitpunkt und deren Schätzungsgüte repräsentiert. Die im nächsten Auswertezeitpunkt gebildete Summenmeßdichte $\rho_{\mathbf{M}}$ wird mit dieser Prädiktionsdichte $\rho_{\mathbf{P}}$ zur Bildung einer Filterdichte $\rho_{\mathbf{Fil}}$ multiplikativ verknüpft (Multimodalfilterung). Der resultierende Erwartungswert der Ortsposition $\langle r\rangle_{ges}$ wird als aktuelle Objektposition ermittelt und z.B. zur Weiterverarbeitung einem Navigationsmodul oder zur Anzeige bereitgestellt. Nach Durchführung der zuvor beschriebenen Dichtenreduktion wird die reduzierte Filterdichte für den nächstfolgenden Auswertezeitpunkt als neue Prädiktionsdichte $\rho_{\mathbf{P}}$ verwendet.

Mit dem erfindungsgemäßen Verfahren wird jede Sensorinformation optimal verwertet. Das Verfahren ist für Anzahl und Art der eingesetzten Sensoren offen, so daß für unterschiedliche Einsatzfälle auf verschiedene Sensorsysteme zurückgegriffen werden kann und diese bei Bedarf ausgetauscht oder ergänzt werden können.

Die Problematik der fehlertoleranten, redundanten Auslegung wird verfahrensmäßig autark gelöst. Fehlerberechnungen unter Berücksichtigung aufwendiger experimenteller Analysen entfallen. Ebenso entfallen die nicht unproblematischen Klassifikationskriterien, ab wann ein Sensor als fehlerhaft gilt. Hierzu ist anzumerken, daß ein Sensor in der Regel nicht so spontan ausfällt, daß dies an den Ausgabesignalen signifikant erkannt werden kann. Auch kann der durchaus nicht untypische Fall eintreten, daß ein Sensor vorübergehend schlechte Werte produziert und dann wieder normal arbeitet, also zeitabhängig von Störungen beaufschlagt ist. Ein Vorteil dieses Verfahrens ist, solche Informationseinbrüche auszufiltern und damit stets das Optimum der korrekten Information bereitzustellen. In den von der individuellen Leistungsfähigkeit und Zuverlässigkeit der einzelnen Sensoren - gemessen an der als Referenz dienenden Gesamtgüte der Positionsermittlung - bestimmten Wichtungsfaktoren spiegelt sich dessen individueller Beitrag an künftigen Positionsermittlungen wieder. Hat ein Sensormeßwert zu einer überdurchschnittlichen Prädiktion der zukünftigen Objektposition geführt, erhält dieser Sensor quasi einen Bonus dadurch, daß sein Wichtungsfaktor entsprechend gegenüber den anderen Sensoren heraufgesetzt wird. Die Positionsangabe dieses Sensors erhält damit für die zukünftige Positionsermittlung ein größeres Gewicht. Entsprechend wird der Wichtungsfaktor eines Sensors reduziert

(Malus) und damit dessen zukünftiger Beitrag zur Ermittlung zukünftiger Objektpositionen vermindert, wenn die auf seiner Positionsangabe beruhende Prädiktion unterdurchschnittlich war.

## Patentansprüche

1. Verfahren zur fehlertoleranten Positionsermittlung eines Objekts,
bei dem sensorische Informationen (I1...In) bereitgestellt werden, die zu bestimmten Auswertezeitpunkten ($t_i$) von verschiedenen Sensoren (S1...Sn) gelieferte individuelle Positionsngaben (P1...Pn) individueller Güte und sensorindividuelle statistische Angaben ($\sigma$1... $\sigma$n) über die Güte umfassen,
bei dem die sensorischen Informationen (I1...In) nach sensorzugeordneten Wichtungen ($w_{ij}$) gewichtet zur Ermittlung jeweils einer auswertezeitpunktaktuellen Objektposition (OP) verwendet werden,
bei dem zum jeweils aktuellen Auswertezeitpunkt ($t_i$) unter Berücksichtigung der Objektdynamik von den sensorindividuellen sensorischen Informationen (I1...In) ausgehend für den nächsten Auswertezeitpunkt ($t_{i+1}$) Objektpositionsschätzungen vorgenommen werden,
bei dem die sensoridividuellen Objektpositionsschätzungen mit der nunmehr im nächsten Auswertezeitpunkt ($t_{i+1}$) aktuell ermittelten Objektposition (OP) verglichen werden und
bei dem jeweils die Wichtungen ($w_{ij}$) für diejenigen Sensoren (S1...Sn), deren sensorische Informationen (I1...In) zu einer hohen Schätzqualität geführt haben, gegenüber den Wichtungen ($w_{ij}$) der anderen Sensoren (S1...Sn) erhöht werden,
wobei die Schätzqualität zumindest umso höher eingestuft wird, je näher die Objektpositionsschatzung des aktuellen Auswertezeitpunkts ($t_i$) an der im nächsten Auswertezeitpunkt ($t_{1+1}$) ermittelten Objektposition (OP) liegt und je geringer die Varianz der Objektpositionsschätzung ist.

2. Verfahren zur fehlertoleranten Positionsermittlung eines Objekts,
bei dem zu bestimmten Auswertezeitpunkten ($t_i$) von mehreren Sensoren (S1...Sn) Einzelmeßdichten ($\rho_M$) geliefert werden, die jeweils eine Positionsangabe (P1...Pn) mit sensorindividueller Güte repräsentieren, bei dem die Einzelmeßdichten unter Bildung einer Summenmeßdichte ($\rho_M$) summiert werden, bei dem zu einem aktuellen Auswertezeitpunkt ($t_i$) unter Berücksichtigung der Objektdynamik zumindest eine Prädiktionsdichte ($\rho_P$) erzeugt wird, die eine Objektpositionsschätzung für den nächsten Auswertezeitpunkt ($t_{i+1}$) und deren Schätzungsgüte repräsentiert,
bei dem die im nächsten Auswertezeitpunkt ($t_{i+1}$) gebildete Summenmeßdichte ($\rho_M$) mit der Prädiktionsdichte ($\rho_P$) des vorhergehenden Auswertezeitpunkts ($t_i$) zur Bildung einer Filterdichte ($\rho_{Fil}$) multiplikativ verknüpft wird,
bei dem aus der Filterdichte ($\rho_{Fil}$) die aktuelle Objektposition (OP) ermittelt wird und
bei dem die Filterdichte ($\rho_{Fil}$) als Prädiktionsdichte ($\rho_P$) für den nächstfolgenden Auswertezeitpunkt verwertet wird.

3. Verfahren nach Anspruch 2,
**gekennzeichnet durch**
folgende Bildungsvorschriften für die:

a) Summenmeßdichte

$$\rho_M = \sum_{i=1}^{n} \rho_M^{(i)} \ ,$$

$$\rho_M^{(i)}(\bar{r},t) = \frac{1}{2\pi\sqrt{|\underline{\underline{R}}_{(i)}|}} \exp\left[-\frac{1}{2}\cdot\left(\bar{r}-\langle\bar{r}\rangle_M^{(i)}(t)\right)^T \cdot \underline{\underline{R}}_{(i)}^{-1}(t)\cdot\left(\bar{r}-\langle\bar{r}\rangle_M^{(i)}(t)\right)\right],$$

b) Prädiktionsdichte

$$\rho_P(\bar{r},t) = \sum_{j=1}^{\hat{n}} \rho_P^{(j)}(\bar{r},t) \ ,$$

$$\rho_P^{(j)}(\bar{r},t)=\frac{w_j}{2\pi\sqrt{\left|\underline{\underline{P}}_{(j)}\right|}}\exp\left[-\frac{1}{2}\cdot\left(\bar{r}-\langle\bar{r}\rangle_P^{(j)}(t)\right)^T\cdot\underline{\underline{P}}_{(j)}^{-1}(t)\cdot\left(\bar{r}-\langle\bar{r}\rangle_P^{(j)}(t)\right)\right]$$

wobei jeweils:

| | |
|---|---|
| T: | Transponentiation |
| t: | beliebiger Auswertezeitpunkt |
| $\langle\bar{r}\rangle_M^{(i)}$**(t)** | Erwartungswert (1. Moment) der i-ten Einzel-Meßdichte $\rho_M^{(i)}(\bar{r},t)$ |
| $\langle\bar{r}\rangle_P^{(j)}$**(t)** | Erwartungswert (1. Moment) der j-ten Einzel-Prädiktionsdichte $\rho_P^{(j)}(\bar{r},t)$ |
| $\underline{\underline{R}}_{(i)}$**(t):** | Kovarianzmatrix (2.Moment) von $\rho_M^{(i)}(\bar{r},t)$ |
| $\underline{\underline{P}}_{(j)}$**(t)**: | Kovarianzmatrix (2.Moment) von $\rho_P^{(j)}(\bar{r},t)$ |
| $w_j$ : | Wichtungsfaktoren mit |

$$\sum_{j=1}^{\hat{n}} w_j = 1$$

c) der Filterdichte

$$\rho_{Fil}=c\cdot\left[\sum_{i=1}^{n}\rho_M^{(i)}\right]\cdot\left[\sum_{j=1}^{\hat{n}}\rho_P^{(j)}\right]=c\cdot\sum_{i,j=1}^{n,\hat{n}}w_{ij}\cdot\exp\left[-\frac{1}{2}\cdot\left(\bar{r}-\langle\bar{r}\rangle_{Fil}^{(i,j)}\right)^T\cdot\underline{\underline{P}}_{Fil}^{(i,j)-1}\cdot\left(\bar{r}-\langle\bar{r}\rangle_{Fil}^{(i,j)}\right)\right]$$

mit den Momenten:

$$\langle\bar{r}\rangle_{Fil}^{(i,j)} := \langle\bar{r}\rangle_P^{(j)}(t)+\underline{\underline{P}}_{Fil}^{(i,j)}\cdot\underline{\underline{R}}_{(i)}^{-1}(t)\cdot\left(\langle\bar{r}\rangle_M^{(i)}(t)-\langle\bar{r}\rangle_P^{(j)}(t)\right)$$

[1. Moment von $\rho_{Fil}$ zum Auswertezeitpunkt t] und

$$\underline{\underline{P}}_{Fil}^{(i,j)} := \left(\underline{\underline{P}}_{(j)}^{-1}(t)+\underline{\underline{R}}_{(i)}^{-1}(t)\right)^{-1}$$

[2. Moment von $\rho_{Fil}$ zum Auswertezeitpunkt t] sowie den Wichtungsfaktoren

$$w_{ij}=\frac{w_j}{4\pi^2\sqrt{\left|\underline{\underline{R}}_{(i)}\right|\left|\underline{\underline{P}}_{(j)}\right|}}\exp\left\{-\frac{1}{2}\left(\langle\bar{r}\rangle_M^{(i)}-\langle\bar{r}\rangle_P^{(j)}\right)^T\cdot\underline{\underline{P}}_{(j)}^{-1}\cdot\underline{\underline{P}}_{Fil}^{(i,j)}\cdot\underline{\underline{R}}_{(i)}^{-1}\cdot\left(\langle\bar{r}\rangle_M^{(i)}-\langle\bar{r}\rangle_P^{(j)}\right)\right\}$$

**4.** Verfahren nach Anspruch 2 oder 3,
**dadurch gekennzeichnet, daß**
der Werteumfang der Filterdichte ($\rho_{Fil}$) vor ihrer anschließenden Verwendung als Prädiktionsdichte ($t_{i+1}$) reduziert wird.

## Claims

1. Method for error-tolerant position-finding for an object,
in which sensor information (I1...In) is provided which comprises individual position details (P1...Pn), which are supplied from different sensors (S1...Sn) at specific evaluation times ($t_i$), of individual quality, and sensor-specific statistical details ($\sigma$1...$\sigma$n) relating to the quality,
in which the sensor information (I1...In) is used, after being weighted with sensor-associated weightings ($w_{ij}$), to determine a respective object position (OP) at the particular evaluation time,
in which object position estimates are made for the respective particular evaluation time ($t_i$), taking account of the object dynamics, from the sensor-specific sensor information (I1...In) for the next evaluation time ($t_{i+1}$),
in which the sensor-specific object position estimates are compared with the object position (OP) which has now been determined at the next particular evaluation time ($t_{i+1}$), and
in which the respective weightings ($w_{ij}$) for those sensors (S1...Sn) whose sensor information (I1...In) has led to a high estimation quality are increased in comparison to the weighting ($w_{ij}$) of the other sensors (S1...Sn),
with the estimation quality at least being classified higher the closer the object position estimate for that particular evaluation time ($t_i$) is to the object position (OP) determined at the next evaluation time ($t_{i+1}$), and the lower the variance of the object position estimate.

2. Method for error-tolerant position-finding for an object,
in which individual measurement densities ($\rho_M$) are supplied from a number of sensors (S1...Sn) at specific evaluation times ($t_i$), each of which represents a position detail (P1...Pn) with a sensor-specific quality, in which the individual measurement densities are added to form a total measurement density ($\rho_M$),
for which at least one prediction density ($\rho_P$) is produced for a particular evaluation time ($t_i$) taking account of the object dynamics, which prediction density ($\rho_P$) represents an object position estimate for the next evaluation time ($t_{i+1}$) and its estimation quality,
in which the total measurement density ($\rho_M$) formed at the next evaluation time ($t_{i+1}$) is linked by multiplication to the prediction density ($\rho_P$) for the previous evaluation time ($t_i$), forming a filter density ($\rho_{Fil}$),
in which the present object position (OP) is determined from the filter density ($\rho_{Fil}$), and
in which the filter density ($\rho_{Fil}$) is assessed as a prediction density ($\rho_P$) for the next evaluation time.

3. Method according to Claim 2,
**characterized by**
the following formation rules for the:

a) total measurement density

$$\rho_M = \sum_{i=1}^{n} \rho_M^{(i)},$$

$$\rho_M^{(i)}(\bar{r}, t) = \frac{1}{2\pi\sqrt{|\underline{\underline{R}}_{(i)}|}} \exp\left[-\frac{1}{2}\cdot\left(\bar{r} - \langle\bar{r}\rangle_M^{(i)}(t)\right)^T \cdot \underline{\underline{R}}_{(i)}^{-1}(t)\cdot\left(\bar{r} - \langle\bar{r}\rangle_M^{(i)}(t)\right)\right],$$

b) Prediction density

$$\rho_P(\bar{r}, t) = \sum_{j=1}^{\hat{n}} \rho_P^{(j)}(\bar{r}, t),$$

$$\rho_P^{(j)}(\bar{r},t) = \frac{w_j}{2\pi\sqrt{|\underline{\underline{P}}_{(j)}|}} \exp\left[-\frac{1}{2}\cdot\left(\bar{r} - \langle\bar{r}\rangle_P^{(j)}(t)\right)^T \cdot \underline{\underline{P}}_{(j)}^{-1}(t)\cdot\left(\bar{r} - \langle\bar{r}\rangle_P^{(j)}(t)\right)\right]$$

where, in each case:

T: transponentiation

t: any given evaluation time

$\langle\bar{r}\rangle_M^{(i)}$ **(t)** expected value (1st moment) of the i-th individual measurement density $\rho_M^{(i)}(\bar{\mathbf{r}},\mathbf{t})$

$\langle\bar{\mathbf{r}}\rangle_p^{(j)}$ **(t)** expected value (1st moment) of the j-th individual prediction density $\rho_P^{(j)}(\bar{\mathbf{r}},\mathbf{t})$

$\underline{\mathbf{R}}_i$ **(t):** covariance matrix (2nd moment) of $\rho_M^{(i)}$ $(\bar{\mathbf{r}}, \mathbf{t})$

$\underline{\mathbf{P}}_j$ **(t)**: covariance matrix (2nd moment) of $\rho_P^{(j)}(\bar{\mathbf{r}},\mathbf{t})$

$\mathbf{w_j}$ : weighting factors where

$$\sum_{j=1}^{\bar{n}} w_j = 1$$

c) the filter density

$$\rho_{Fil} = c\cdot\left[\sum_{i=1}^{n}\rho_M^{(i)}\right]\cdot\left[\sum_{j=1}^{\hat{n}}\rho_P^{(j)}\right] = c\cdot\sum_{i,j=1}^{n,\hat{n}} w_{ij}\cdot\exp\left[-\frac{1}{2}\cdot\left(\bar{r} - \langle\bar{r}\rangle_{Fil}^{(i,j)}\right)^T\cdot\underline{\underline{P}}_{Fil}^{(i,j)-1}\cdot\left(\bar{r} - \langle\bar{r}\rangle_{Fil}^{(i,j)}\right)\right]$$

with the moments:

$$\langle\bar{r}\rangle_{Fil}^{(i,j)} := \langle\bar{r}\rangle_P^{(j)}(t) + \underline{\underline{P}}_{Fil}^{(i,j)}\cdot\underline{\underline{R}}_{(i)}^{-1}(t)\cdot\left(\langle\bar{r}\rangle_M^{(i)}(t) - \langle\bar{r}\rangle_P^{(j)}(t)\right)$$

[1st moment of $\rho_{Fil}$ at the evaluation time t] and

$$\underline{P}_{Fil}^{(i,j)} := (\underline{P}_{(j)}^{-1}(t) + \underline{R}_{(i)}^{-1}(t))^{-1}$$

[2nd moment of $\rho_{Fil}$ at the evaluation time t] and

the weighting factors

$$w_{ij} = \frac{w_j}{4\pi^2\sqrt{|\underline{\underline{R}}_{(i)}||\underline{\underline{P}}_{(j)}|}} \exp\left\{-\frac{1}{2}\left(\langle\bar{r}\rangle_M^{(i)} - \langle\bar{r}\rangle_P^{(j)}\right)^T\cdot\underline{\underline{P}}_{(j)}^{-1}\cdot\underline{\underline{P}}_{Fil}^{(i,j)}\cdot\underline{\underline{R}}_{(i)}^{-1}\cdot\left(\langle\bar{r}\rangle_M^{(i)} - \langle\bar{r}\rangle_P^{(j)}\right)\right\}$$

**4.** Method according to Claim 2 or 3,

**characterized in that**
the value range of the filter density ($\rho_{Fil}$) is reduced before it is subsequently used as the prediction density ($t_{i+1}$).

## Revendications

1. Procédé pour la détection tolérante aux erreurs de la position d'un objet,
dans lequel il est mis à disposition des informations (I1 ... In) sensorielles qui comprennent des indications (P1 .. Pn) individuelles de position de qualité individuelle fournies par différents détecteurs (S1 ... Sn) à des instants ($t_i$) d'évaluation donnés et des indications (σ1 ... σn) statistiques des différents détecteurs sur la qualité,
dans lequel les informations (I1 ... In) sensorielles, pondérées selon des pondérations ($w_{ij}$) attribuées aux détecteurs, sont à utilisées respectivement pour la détermination d'une position (OP) actuelle d'un objet à l'instant d'évaluation,
dans lequel des estimations de la position d'un objet au prochain instant ($t_{i+1}$) d'évaluation, sont réalisées à l'instant ($t_i$) d'évaluation actuel respectif en prenant en compte la dynamique de l'objet à partir des informations (I1 ... In) sensorielles des différents détecteurs
dans lequel les estimations de la position d'un objet des différents détecteurs sont comparées à la position (OP) d'un objet, déterminée actuellement, au prochain instant ($t_{i+1}$) d'évaluation et
dans lequel les pondérations ($w_{ij}$) pour les détecteurs (S1 ... Sn), dont les informations (I1 ... In) sensorielles ont conduit à une grande qualité d'estimation, sont augmentées par rapport aux pondérations ($w_{ij}$) des autres détecteurs (S1 ... Sn),
la qualité de l'estimation obtenant un classement d'autant meilleur que l'estimation de la position d'un objet l'instant ($t_i$) d'évaluation actuel est proche de la position (OP) d'un objet déterminée au prochain instant ($t_{i+1}$) d'évaluation et que la variance de l'estimation de la position d'un objet est petite.

2. Procédé pour la détection tolérante aux erreurs de la position d'un objet,
dans lequel il est fourni par plusieurs détecteurs (S1 ... Sn) à des instants ($t_i$) d'évaluation donnés des densités ($\rho_M$) de mesure individuelles, qui représentent respectivement une indication (P1 ... Pn) de position avec une qualité propre à chaque détecteur,
dans lequel les densités de mesure individuelles sont additionnées en formant une densité ($\rho_M$) de mesure cumulative,
dans lequel au moins une densité ($\rho_P$) de prédiction est produite à un instant ($t_i$) d'évaluation actuel en prenant en compte la dynamique de l'objet, densité qui représente une estimation de la position d'un objet pour le prochain instant ($t_{i+1}$) d'évaluation et sa qualité d'estimation,
dans lequel la densité ($\rho_M$) de mesure cumulative formée au prochain instant ($t_{j+1}$) d'évaluation est reliée par multiplication à la densité ($\rho_P$) de prédiction de l'instant ($t_i$) d'évaluation précédent pour former une densité ($\rho_{Fil}$) du filtre,
dans lequel la position (OP) actuelle d'un objet est déterminée à partir de la densité ($\rho_{Fil}$) du filtre et
dans lequel la densité ($\rho_{Fil}$) du filtre est exploitée en tant que densité ($\rho_P$) de prédiction pour le prochain instant d'évaluation.

3. Procédé selon la revendication 2,
**caractérisé par**
les prescriptions suivantes de formation pour les :

a) densité de mesure cumulative

$$\rho_M = \sum_{i=1}^{a} \rho_M^{(i)},$$

$$\rho_M^{(i)}(\bar{r}, t) = \frac{1}{2\pi\sqrt{|\underline{\underline{R}}_{(i)}|}} \exp\left[-\frac{1}{2}\cdot\left(\bar{r} - \langle\bar{r}\rangle_M^{(i)}(t)\right)^T \cdot \underline{\underline{R}}_{(i)}^{-1}(t)\cdot\left(\bar{r} - \langle\bar{r}\rangle_M^{(i)}(t)\right)\right],$$

b) densité de prédiction

$$\rho_P(\bar{r},t) = \sum_{j=1}^{\hat{n}} \rho_P^{(j)}(\bar{r},t),$$

$$\rho_P^{(j)}(\bar{r},t) = \frac{w_j}{2\pi\sqrt{|\underline{\underline{P}}_{(j)}|}} \exp\left[-\frac{1}{2}\cdot\left(\bar{r}-\langle\bar{r}\rangle_P^{(j)}(t)\right)^T\cdot\underline{\underline{P}}_{(j)}^{-1}(t)\cdot\left(\bar{r}-\langle\bar{r}\rangle_P^{(j)}(t)\right)\right]$$

où respectivement :

- T : transposée
- t : instant d'évaluation quelconque
- $\langle\bar{r}\rangle^{(i)}(t)$ espérance mathématique (1er moment) de la ième densité $\rho^{(i)}(\bar{r},t)$ de mesure individuelle
- $\langle\bar{r}\rangle_P^{(j)}(t)$ Espérance mathématique (1er moment) de la jème densité $\rho_P^{(j)}(\bar{r},t)$ de prédiction individuelle
- $\bar{\bar{R}}_{(i)}(t)$: Matrice de covariance (2ème moment) de $\rho^{(i)}\bar{r},t)$
- $\bar{\bar{P}}_{(j)}(t)$: Matrice de covariance (2ème moment) de $\rho_P^{(j)}(\bar{r},t)$
- $w_j$ : Facteurs de pondération avec

$$\sum_{j=1}^{\tilde{n}} w_j = 1$$

c) densité du filtre

$$\rho_{Fil} = c\cdot\left[\sum_{i=1}^{n}\rho_M^{(i)}\right]\cdot\left[\sum_{j=1}^{\hat{n}}\rho_P^{(j)}\right] = c\cdot\sum_{i,j=1}^{n,\hat{n}} w_{ij}\cdot\exp\left[-\frac{1}{2}\cdot\left(\bar{r}-\langle\bar{r}\rangle_{Fil}^{(i,j)}\right)^T\cdot\underline{\underline{P}}_{Fil}^{(i,j)-1}\cdot\left(\bar{r}-\langle\bar{r}\rangle_{Fil}^{(i,j)}\right)\right]$$

avec les moments :

$$\langle\bar{r}\rangle_{Fil}^{(i,j)} := \langle\bar{r}\rangle_P^{(j)}(t) + \underline{\underline{P}}_{Fil}^{(i,j)}\cdot\underline{\underline{R}}_{(i)}^{-1}(t)\cdot\left(\langle\bar{r}\rangle_M^{(i)}(t)-\langle\bar{r}\rangle_P^{(j)}(t)\right)$$

[1er moment de $\rho_{Fil}$ à l'instant t d'évaluation] et

$$\underline{\underline{P}}_{Fil}^{(i,j)} := \left(\underline{\underline{P}}_{(j)}^{-1}(t) + \underline{\underline{R}}_{(i)}^{-1}(t)\right)^{-1}$$

[2ème moment de $\rho_{Fil}$ à l'instant t d'évaluation]
et

les facteurs de pondération

$$w_{ij} = \frac{w_j}{4\pi^2\sqrt{|\underline{\underline{R}}_{(i)}||\underline{\underline{P}}_{(j)}|}} \exp\left\{-\frac{1}{2}\left(\langle\bar{r}\rangle_M^{(i)}-\langle\bar{r}\rangle_P^{(j)}\right)^T\cdot\underline{\underline{P}}_{(j)}^{-1}\cdot\underline{\underline{P}}_{Fil}^{(i,j)}\cdot\underline{\underline{R}}_{(i)}^{-1}\cdot\left(\langle\bar{r}\rangle_M^{(i)}-\langle\bar{r}\rangle_P^{(j)}\right)\right\}$$

4. Procédé selon la revendication 2 ou 3,
**caractérisé en ce que**
l'étendue des valeurs de la densité ($\rho_{Fil}$) du filtre est réduite avant son utilisation ultérieure en tant que densité ($t_{i+1}$) de prédiction.

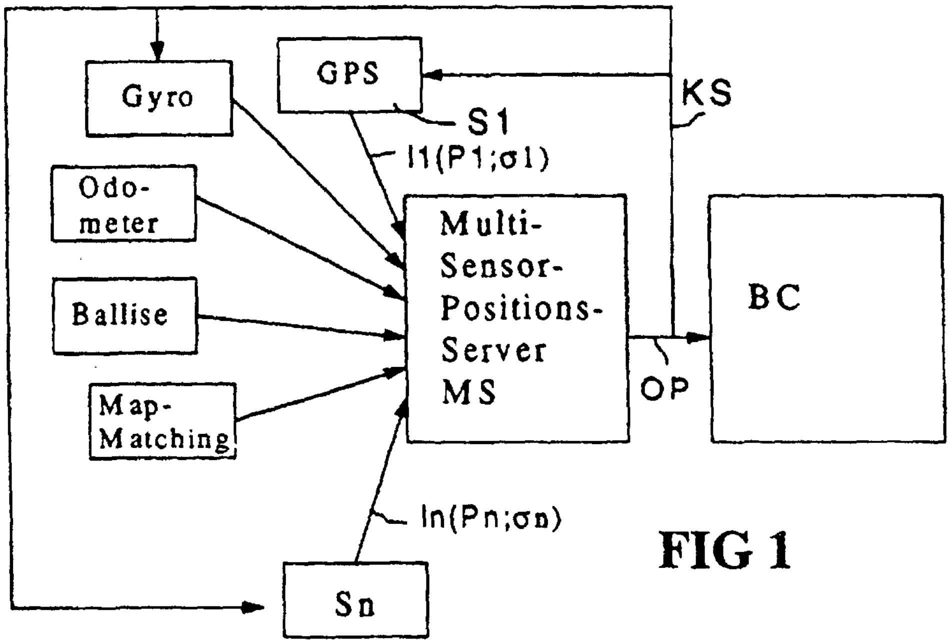
Gyro
GPS
S1
KS
I1(P1;σ1)
Odo-
meter
Ballise
Map-
Matching
Multi-
Sensor-
Positions-
Server
MS
BC
OP
In(Pn;σn)
Sn

FIG 1

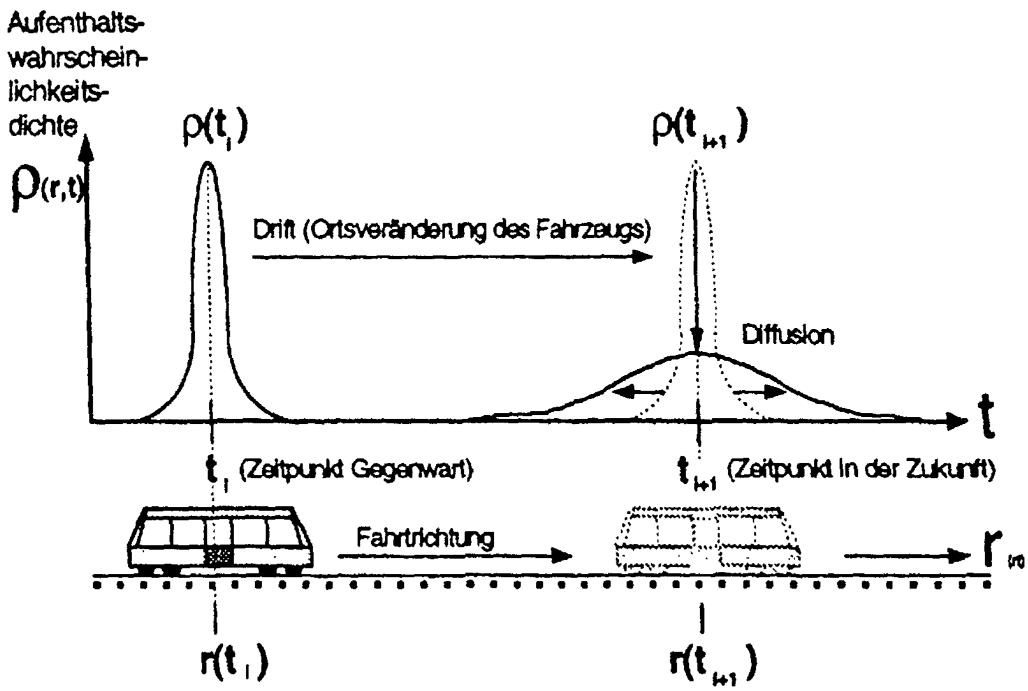
Aufenthalts-
wahrschein-
lichkeits-
dichte
ρ(r,t)
ρ(t_i)
ρ(t_i+1)
Drift (Ortsveränderung des Fahrzeugs)
Diffusion
t
t_i (Zeitpunkt Gegenwart)
t_i+1 (Zeitpunkt in der Zukunft)
Fahrtrichtung
r(t)
r(t_i)
r(t_i+1)

FIG 2

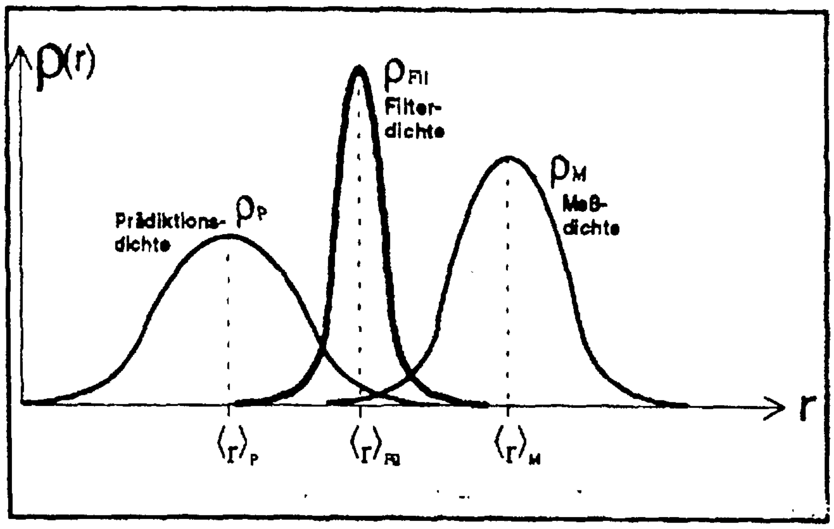
ρ(r)
ρ_Fil
Filter-
dichte
ρ_M
Meß-
dichte
Prädiktions- ρ_P
dichte
r
⟨r⟩_P
⟨r⟩_Fil
⟨r⟩_M

FIG 3

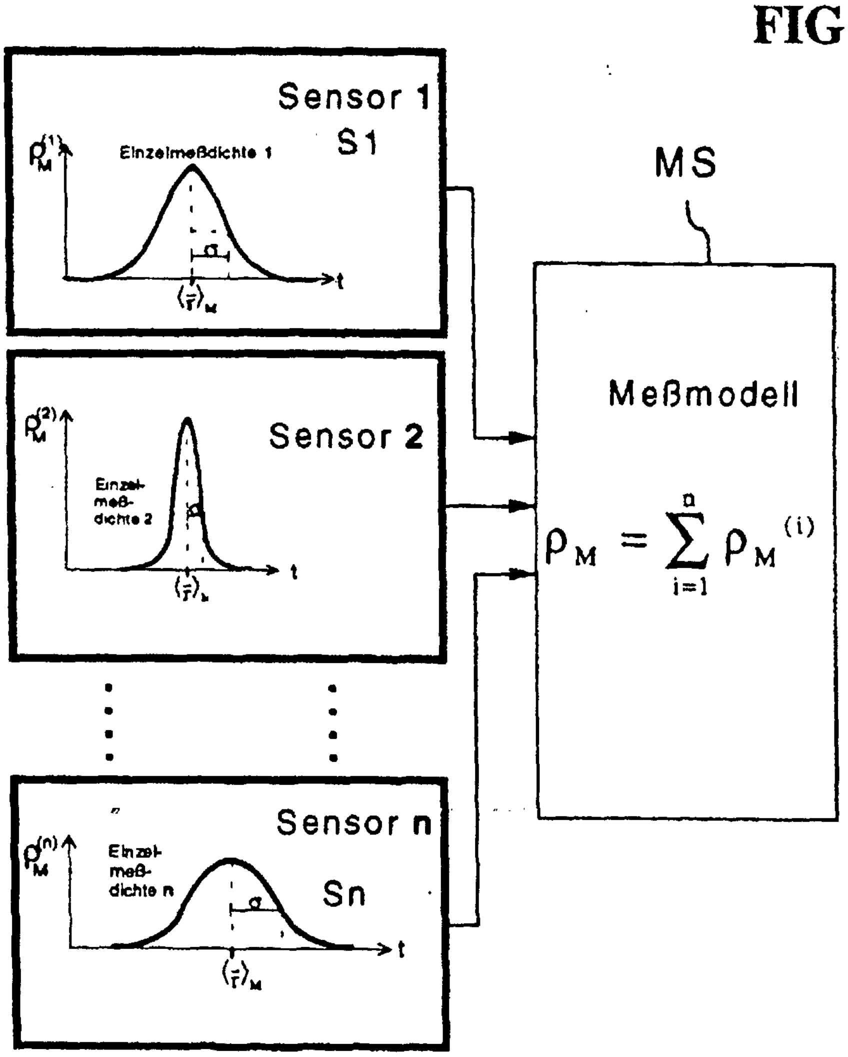
Sensor 1
S1
Einzelmeßdichte 1
Sensor 2
Einzel-
meß-
dichte 2
Sensor n
Einzel-
meß-
dichte n
Sn
MS
Meßmodell
$\rho_M = \sum_{i=1}^{n} \rho_M^{(i)}$

FIG 4

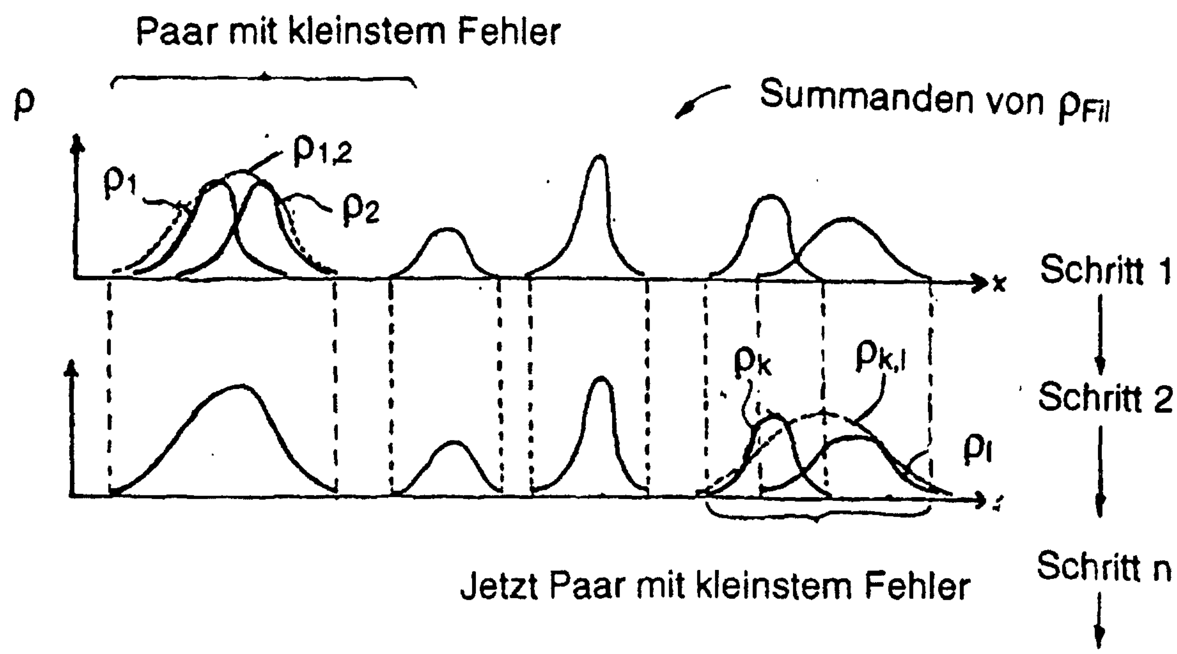
Paar mit kleinstem Fehler
ρ
Summanden von ρFil
ρ1,2
ρ1
ρ2
x
Schritt 1
ρk
ρk,l
Schritt 2
ρl
Schritt n
Jetzt Paar mit kleinstem Fehler

FIG 5

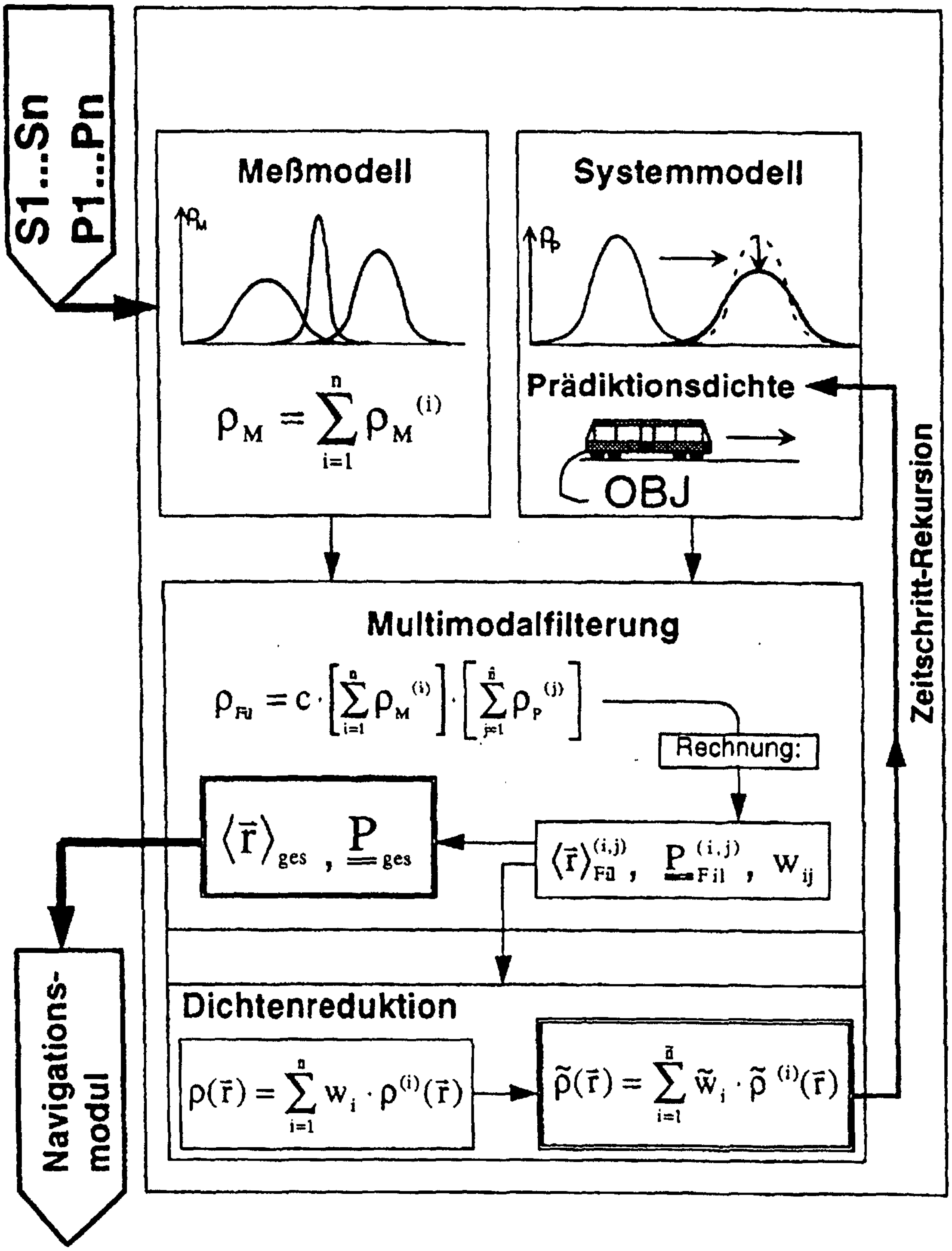
S1...Sn
P1...Pn
Meßmodell
$\rho_M = \sum_{i=1}^{n} \rho_M^{(i)}$
Systemmodell
Prädiktionsdichte
OBJ
Multimodalfilterung
$\rho_{Fil} = c \cdot \left[\sum_{i=1}^{n} \rho_M^{(i)}\right] \cdot \left[\sum_{j=1}^{\hat{n}} \rho_P^{(j)}\right]$
Rechnung:
$\langle \vec{r} \rangle_{ges}\ ,\ \underline{\underline{P}}_{ges}$
$\langle \vec{r} \rangle_{Fil}^{(i,j)},\ \underline{\underline{P}}_{Fil}^{(i,j)},\ w_{ij}$
Dichtenreduktion
$\rho(\vec{r}) = \sum_{i=1}^{n} w_i \cdot \rho^{(i)}(\vec{r})$
$\tilde{\rho}(\vec{r}) = \sum_{i=1}^{\tilde{n}} \tilde{w}_i \cdot \tilde{\rho}^{(i)}(\vec{r})$
Zeitschritt-Rekursion
Navigations-
modul

FIG 6